# EUROPEAN PATENT APPLICATION

(11) **EP 4 572 111 A1**
(43) Date of publication of application: **18.06.2025**
(21) Application number: 22956778.9
(22) Date of filing: 30.08.2022
(51) Int. Cl.: H02M 1/08, H02M 1/12, H02M 3/335

(54) **CONTROL METHOD AND CIRCUIT FOR SWITCH POWER SOURCE, AND SWITCH POWER SOURCE**

(71) Applicant: BCD Shanghai Micro-Electronics Company Limited, Shanghai 200240 (CN)
(72) Inventor: YING, Zheng, Shanghai 200240 (CN); WANG, Feng, Shanghai 200240 (CN); ZHAO, Andong, Shanghai 200240 (CN); CHEN, Bo, Shanghai 200240 (CN)
(74) Representative: Marks & Clerk LLP
(86) International application number: PCT/CN2022/115751
(87) International publication number: WO 2024/044944

(57) **Abstract**

A control method and circuit for a switch power source, and a switch power source, which relate to the technical field of switch power sources. In the solution, a resonance period signal of a switch power source is detected in real time; and a delay time is superimposed on the resonance period signal, so that a control signal controls a primary-side power switch tube of the switch power source to turn on within a preset range near a target valley of a resonance waveform according to the resonance period signal and a delay signal, wherein the delay time is related to a first parameter and a second parameter, the first parameter being a set value that changes over time within a certain range, and the second parameter being a function related to a resonance period of the switch power source. It can be seen that in the present application, the resonance period signal of the switch power source can be detected in real time, and the primary-side power switch tube of the switch power source can be controlled to reliably turn on within the preset range near the target valley according to the resonance period signal of the switch power source and the delay time, such that the control accuracy is improved.

## Description

### FIELD

The present disclosure relates to the technical field of switching power supplies, and in particular to a control method and control circuit for a switching power supply, and a switching power supply.

### BACKGROUND

In a flyback switching power supply system, after a primary-side power switch tube is turned off, a secondary diode is turned on, and the energy stored in the transformer begins to transfer to the secondary side. At the end of the energy transfer, the secondary diode is cut off. At this time, the excitation inductance in the transformer will generate an attenuated resonance with the parasitic capacitance of the primary-side power switch tube, and the resonance will be maintained until the primary-side power switch tube is turned on for the next time.

In order to reduce the loss of the primary-side power switch tube, the primary-side power switch tube is usually controlled to turn on by a valley-lock QR (quasi resonant) mode in the related technology. Specifically, the primary-side power switch tube is controlled to turn on at a valley of a resonance waveform (when the primary-side power switch tube is a MOS (metal-oxide-semiconductor) tube, the Vds of the MOS is relatively large), which can reduce the loss of the primary-side power switch tube and improve the efficiency of the system. However, during the operation of the system, if the same valley of the resonance waveform is selected every time to control the primary-side power switch tube to turn on, the switching frequency of the system will remain unchanged, and thus, the EMI (Electromagnetic Interference) performance of the system will be poor.

In order to further improve the EMI performance of the system, a jitter frequency corresponding to a negative half-cycle resonance cycle in the QR mode. Specifically, the primary-side power switch tube is controlled to turn on at any time on the negative half-cycle where the selected valley is located. For example, if the selected valley is the second valley, the primary-side power switch tube can be controlled to turn on at any time on the left of the second valley and within a negative half-cycle, or at any time on the right of the second valley and within a negative half-cycle. The specific implementation is as follows. When the zero point before the second valley in the resonance waveform is detected, a preset time period delay is added to control the primary-side power switch tube to turn on (the preset time period is a changing value, and is not greater than 1/2 resonance cycle, so as to ensure that a moment when the primary-side power switch tube is turned on in the negative half-cycle where the second valley is located), such that the switching frequency of the system is changing, thereby improving the EMI performance of the system.

However, for a flyback switching power supply system with a wide range of input and multi-voltage output, the resonance cycles corresponding to different input/output voltages and different loads are different. Therefore, when the primary-side power switch tube is controlled to turn on by the above way, the primary-side power switch tube may be turned on in the positive half-circle of the resonance waveform. That is, with the method in the related technology, the primary-side power switch tube cannot be accurately turned on at a certain moment in the negative half-cycle where the selected valley is located, rendering a poor accuracy.

### SUMMARY

The purpose of the present disclosure is to provide a control method and control circuit for a switching power supply, and a switching power supply. A resonance cycle signal of the switching power supply can be detected in real time, and the primary-side power switch tube of the switching power supply can be controlled to reliably turn on within a preset range near a target valley according to the resonance cycle signal of the switching power supply and a delay time, such that the control accuracy is improved.

In order to solve the above technical problems, the present disclosure provides a control method for a switching power supply, including:
detecting a resonance cycle signal of the switching power supply in real time; and
extending the resonance cycle signal by a delay time, so that a control signal controls a primary-side power switch tube of the switching power supply to turn on within a preset range near a target valley of a resonance waveform according to the resonance cycle signal and the extended resonance cycle signal;
where the delay time is related to a first parameter and a second parameter, the first parameter being a value set over time within a certain range, and the second parameter being a function related to a resonance cycle of the switching power supply.

Preferably, the preset range is related to a periodic function associated with the first parameter.

Extending the resonance cycle signal by a delay time, so that a control signal controls a primary-side power switch tube of the switching power supply to turn on within a preset range near a target valley of a resonance waveform according to the resonance cycle signal and the extended resonance cycle signal, includes:
when a function value of the periodic function associated with the first parameter is zero, adjusting the second parameter, such that the control signal corresponds to a reference position in the resonance waveform according to the resonance cycle signal and the extended resonance cycle signal, where the reference position being a position in a center, on the left, or on the right of the target valley; and
adding the function value of the periodic function of the first parameter to the reference position so that the control signal controls the primary-side power switch tube of the switching power supply to turn on within the preset range near the target valley.

Preferably, adjusting the second parameter includes:
obtaining the resonance cycle of the resonance waveform; and
adjusting the second parameter adaptively according to the resonance cycle, so that the control signal controls the primary-side power switch tube to turn on at the target valley.

Preferably, obtaining the resonance period of the resonance waveform includes:
obtaining any one of a time length of a plurality of continuous valleys, a time length of a plurality of continuous peaks, or a time length of a plurality of continuous zero crossing points in the resonance waveform; and
calculating the resonance cycle according to the obtained time length and a corresponding number of the plurality of continuous valleys, the plurality of continuous peaks, or the plurality of continuous zero crossing points.

Preferably, adjusting the second parameter includes:
obtaining a working parameter of the switching power supply at a preset interval; and
determining the second parameter according to the working parameter and a preset mapping relationship between a working parameter and the second parameter.

Preferably, after obtaining the working parameter of the switching power supply at a preset interval, the method further includes:
determining whether the working parameter changes; and
if determining that the working parameter changes, re-determining the second parameter according to the changed working parameter and the preset mapping relationship between the working parameter and the second parameter.

Preferably, determining whether the working parameter changes includes:
determining whether a grade of the working parameter changes; and
if determining that the grade changes, determining that the working parameter changes.

Preferably, the working parameter includes one or more of a primary-side input voltage, a secondary-side output voltage, and a load value of the switching power supply.

Preferably, when the working parameter includes the primary-side input voltage and the secondary-side output voltage of the switching power supply;
obtaining the working parameter of the switching power supply includes:
when the primary-side power switch tube is on, calculating the primary-side input voltage according to a voltage of auxiliary winding, a number of turns of the auxiliary winding, and a number of turns of primary-side winding; and
when the secondary-side switch tube is on, calculating the secondary-side output voltage according to the voltage of the auxiliary winding, the number of turns of the auxiliary winding, and a number of turns of secondary-side winding;
where the auxiliary winding is grounded together with the primary-side winding.

Preferably, when the working parameter includes a load value;
obtaining the working parameter of the switching power supply includes:
obtaining a switching frequency of the primary-side power switch tube of the switching power supply; and
determining the load value according to the switching frequency;
where the load value is positively correlated with the switching frequency.

Preferably, extending the resonance cycle signal by a delay time, so that a control signal controls a primary-side power switch tube of the switching power supply to turn on within a preset range near a target valley of a resonance waveform according to the resonance cycle signal and the extended resonance cycle signal, includes:
after determining the target valley according to the load value of the switching power supply, detecting a previous zero crossing point of a previous valley before the target valley; and
determining a moment obtained by extending the control signal corresponding to the previous zero crossing point by the delay time as the moment when the primary-side power switch tube is turned on, so that the control signal controls the primary-side power switch tube to turn on at the determined moment.

In order to solve the above technical problems, the present disclosure also provides a control circuit for a switching power supply, including:
a detecting unit, configured to detect a resonance cycle signal of the switching power supply in real time; and
a controlling unit, configured to extend the resonance cycle signal by a delay time, so that a control signal controls a primary-side power switch tube of the switching power supply to turn on within a preset range near a target valley of a resonance waveform according to the resonance cycle signal and the extended resonance cycle signal;
where the delay time is related to a first parameter and a second parameter, the first parameter being a value set over time within a certain range, and the second parameter being a function related to a resonance cycle of the switching power supply.

Preferably, the control unit includes:
a resonance valley corresponding circuit, configured to, when a function value of the periodic function associated with the first parameter is zero, adjust the second parameter, such that the control signal corresponds to a reference position in the resonance waveform according to the resonance cycle signal and the extended resonance cycle signal, where the reference position being a position in a center, on the left, or on the right of the target valley; and
a jitter frequency circuit, configured to add the function value of the periodic function of the first parameter to the reference position so that the control signal controls the primary-side power switch tube of the switching power supply to turn on within the preset range near the target valley.

In order to solve the above technical problems, the present disclosure also provides a switching power supply, including the control circuit for the switching power supply described above.

The present disclosure provides a control method for a switching power supply, which relates to the technical field of switching power supplys. In the solution, a resonance cycle signal of a switching power supply is detected in real time; and the resonance cycle signal is extended by a delay time, so that a control signal controls a primary-side power switch tube of the switching power supply to turn on within a preset range near a target valley of a resonance waveform according to the resonance cycle signal and the extended resonance cycle signal, where the delay time is related to a first parameter and a second parameter, the first parameter being a value set over time within a certain range, and the second parameter being a function related to a resonance cycle of the switching power supply. It can be seen that in the present disclosure, the resonance cycle signal of the switching power supply can be detected in real time, and the primary-side power switch tube of the switching power supply can be controlled to reliably turn on within the preset range near the target valley according to the resonance cycle signal of the switching power supply and the delay time, such that the control accuracy is improved.

The present disclosure also provides a control circuit for a switching power supply, and a switching power supply, which have the same beneficial effect as the control method for the switching power supply described above.

### BRIEF DESCRIPTION OF THE DRAWINGS

In order to more clearly describe technical solutions in the embodiments of the present disclosure, drawings to be used in the description of the conventional technology or the embodiments are briefly introduced hereinafter. It is apparent that the drawings described below show merely some embodiments of the present disclosure, and those skilled in the technology can obtain other drawings based on the provided drawings without any creative effort.
FIG. 1a is a schematic diagram of a first waveform in the related technology;
FIG. 1b is a schematic diagram of a second waveform in the related technology;
FIG. 2 is a flow diagram of a control method for a switching power supply according to the present disclosure;
FIG. 3 is a partial structural diagram of a switching power supply according to the present disclosure;
FIG. 4 is a schematic diagram of a waveform according to the present disclosure;
FIG. 5 is a control schematic diagram of a switching power supply according to the present disclosure;
FIG. 6a is a working waveform diagram of a switching power supply according to the present disclosure;
FIG. 6b is a schematic diagram of generating a resonance period signal according to the present disclosure;
FIG. 6c is a schematic diagram of a control signal according to the present disclosure;
FIG. 6d is a waveform diagram of a periodic function related to a first parameter according to the present disclosure;
FIG. 6e is a first waveform diagram in which a primary-side power switch tube is turned on at the left of a target valley according to the present disclosure;
FIG. 6f is a first waveform diagram in which a primary-side power switch tube is turned on at a target valley according to the present disclosure;
FIG. 6g is a first waveform diagram in which a primary-side power switch tube is turned on at the right of a target valley according to the present disclosure;
FIG. 7a is a schematic diagram of another working waveform of a switching power supply according to the present disclosure;
FIG. 7b is a schematic diagram of another control signal according to the present disclosure;
FIG. 7c is a schematic diagram of a function related to a second parameter according to the present disclosure;
FIG. 7d is a second waveform diagram in which a primary-side power switch tube is turned on at the left of a target valley according to the present disclosure;
FIG. 7e is a second waveform diagram in which a primary-side power switch tube is turned on at a target valley according to the present disclosure;
FIG. 7f is a second waveform diagram in which a primary-side power switch tube is turned on at the right of a target valley according to the present disclosure; and
FIG. 8 is a structural block diagram of a control circuit for a switching power supply according to the present disclosure.

### DETAILED DESCRIPTION

The core of the present disclosure is to provide a control method and control circuit for a switching power supply, and a switching power supply. The resonance cycle signal of the switching power supply can be detected in real time, and the primary-side power switch tube of the switching power supply can be controlled to reliably turn on within the preset range near the target valley according to the resonance cycle signal of the switching power supply and the delay time, such that the control accuracy is improved.

In order to make the objectives, technical solutions and advantages of the embodiments of the present disclosure clearer, the technical solutions in the embodiments of the present disclosure will be described clearly and completely hereinafter with reference to the drawings in the embodiments of the present disclosure. Apparently, the described embodiments are a part of embodiments of the present disclosure, rather than all of embodiments. Based on the embodiments of the present disclosure, all other embodiments obtained by those skilled in the art without any creative work fall into the protection scope of the present disclosure.

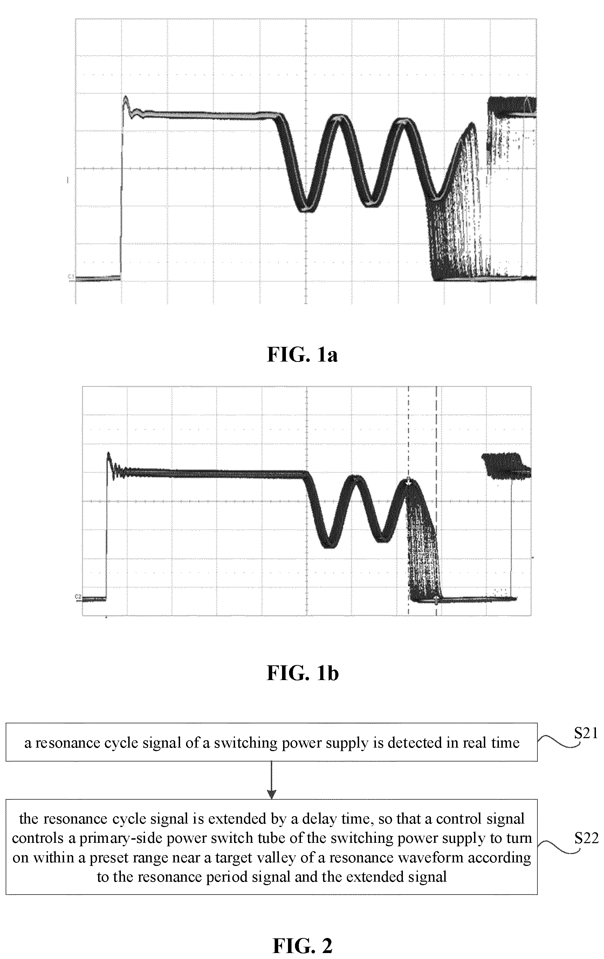

Referring to FIG. 1a and FIG. 1b, FIG. 1a is a schematic diagram of a first waveform in the related technology, and FIG. 1b is a schematic diagram of a second waveform in the related technology. In FIG. 1a and FIG. 1b, the left side is a waveform corresponding to a time period during which a primary-side power switch tube is turned on, the higher part in the middle is a waveform corresponding to a time period during which a secondary-side switch tube is turned on, and a decaying sinusoidal waveform on the right side is a resonance waveform generated after the secondary-side switch tube is turned off. Here, the primary-side power switch tube is controlled to turn on at a negative half-cycle of the third valley in FIG. 1a and FIG. 1b. However, experimental results obtained by using the control method in the related technology are as follows: the primary-side power switch tube is turned on at the left of the negative half-cycle of the third valley in FIG. 1a; and the primary-side power switch tube is turned on at the left of the third valley or even close to the second peak in FIG. 1b, which does not meet the requirement of turning on the primary-side power switch tube at the negative half-cycle.

As shown in FIG. 2, FIG. 2 is a flow diagram of a control method for a switching power supply according to the present disclosure. The method includes S21 to S22.

In S11, a resonance cycle signal of a switching power supply is detected in real time.

Specifically, the resonance cycle signal here represents a resonance signal of the switching power supply, which can specifically represent a case in which a resonance waveform passes a zero crossing point (e.g., for resonance waveform at a positive half-cycle, the resonance cycle signal is at a high level, and for a resonance waveform at a negative half-cycle, the resonance cycle signal is at a low level), which can be specifically referred to Tdem in the first and second embodiments below.

In S12, the resonance cycle signal is extended by a delay time, so that a control signal controls a primary-side power switch tube of the switching power supply to turn on within a preset range near a target valley of a resonance waveform according to the resonance period signal and the extended signal;
where the delay time is related to a first parameter and a second parameter, the first parameter being a value set over time within a certain range, and the second parameter being a function related to a resonance cycle of the switching power supply.

After detecting the resonance period signal, a delay time is added after a certain resonance period, so that the control signal, generated at the resonance period signal, controls the primary-side power switch tube to turn on within the preset range near the target valley of the resonance waveform, after the delay time.

Specifically, in order to improve the EMI performance of the system, the primary-side power switch tube is turned on at different positions in the negative half-cycle where the target valley is located in two adjacent cycles, where the preset range of the target valley refers to the negative half-cycle where the target valley is located. That is, turning on the primary-side power switch tube within the preset range of the target valley refers to that the primary-side power switch tube is controlled to turn on randomly within the preset range of the target valley in different cycles, and positions where the primary-side power switch tube is turned on in two adjacent cycles are different.

The delay time is related to the first parameter and the second parameter, the first parameter being set over time, and the second parameter being the function related to the resonance cycle of the switching power supply. Hence, the control method in the present disclosure can determine the delay time according to the resonance cycle, so as to determine the moment when the primary-side power switch tube is turned on, thereby improving the turn-on reliability of the primary-side power switch tube.

As a preferred embodiment, the preset range is related to a periodic function associated with the first parameter.

Extending the resonance cycle signal by a delay time, so that a control signal controls a primary-side power switch tube of the switching power supply to turn on within a preset range near a target valley of a resonance waveform according to the resonance cycle signal and the extended signal, includes:
when a function value of the periodic function associated with the first parameter is zero, adjusting the second parameter, such that the control signal corresponds to a reference position in the resonance waveform according to the resonance cycle signal and the extended resonance cycle signal, where the reference position being a position in a center, on the left, or on the right of the target valley; and
adding the function value of the periodic function of the first parameter to the reference position so that the control signal controls the primary-side power switch tube of the switching power supply to turn on within the preset range near the target valley.

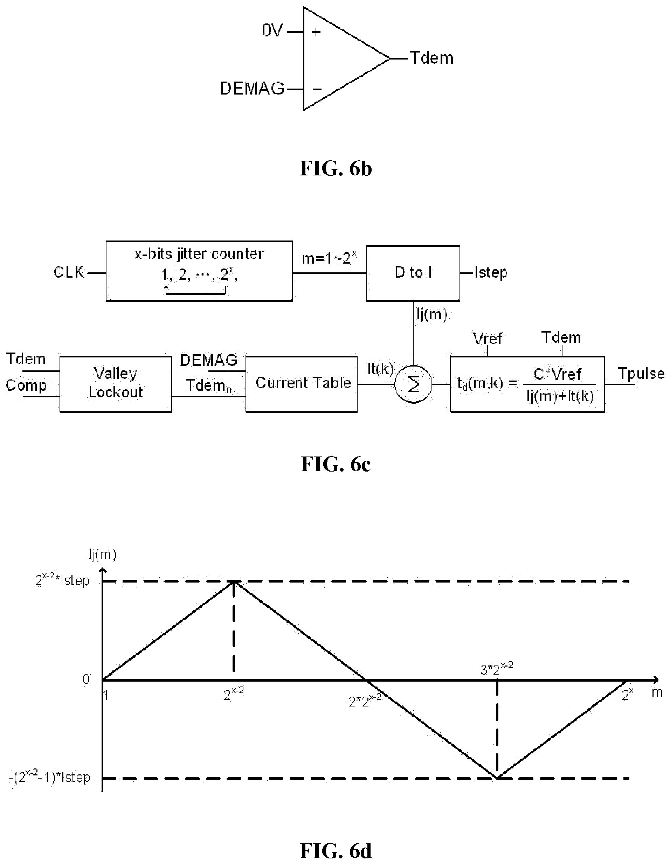

Specifically, the periodic function corresponding to the first parameter being related to the preset range, specifically refers to that the periodic function is a jitter frequency amount in the delay time (in a specific embodiment, the first parameter is m in FIG. 6d, and the periodic function related to the first parameter is Ij(m) in FIG. 6d). Here, a role of the first parameter is to ensure that the primary-side power switch tube is turned on in a range near the target valley, so that it is not turned on in a fixed position of the target valley.

At this time, the function value of the periodic function corresponding to the first parameter being zero (that is, the corresponding Ij(m) in FIG. 6d is zero, while m can be 1 or 2*2^{x-2} or 2^{x}) means that the jitter frequency amount added to the delay time is zero, that is, the primary-side power switch tube should be accurately turned on at the target valley or any reference position on the left or right of the target valley. Therefore, if the primary-side power switch tube is not accurately turned on at any reference position at this time, it means that the second parameter is not accurate. Thus, when the function value of the periodic function corresponding to the first parameter is zero, the second parameter is adjusted, so as to ensure that the primary-side power switch tube can be accurately turned on at any time within the preset range near the target valley after the jitter frequency amount is added.

After aligning the control signal with a certain reference position near the target valley, the periodic function related to the first parameter is added on the basis of the reference position, so that the control signal changes periodically near the reference position. Therefore, when this control signal controls the primary-side power switch tube to turn on, the primary-side power switch tube is controlled to turn on randomly near the reference position. In a specific embodiment, the reference position is the center of the target valley.

As a preferred embodiment, adjusting the second parameter includes:
obtaining the resonance cycle of the resonance waveform; and
adjusting the second parameter adaptively according to the resonance cycle, so that the control signal controls the primary-side power switch tube to turn on at the target valley.

Specifically, since the second parameter is a function related to the resonance cycle (specifically, reference can be made to the following embodiment where the second parameter is k), one way to adjust the second parameter in the present disclosure is: adjusting the second parameter adaptively according to the resonance waveform, so that, when the function value of the periodic function corresponding to the first parameter is zero, the control signal can control the primary-side power switch tube to accurately turn on at a reference position, where the reference position is a position in the center, on the left, or on the right of the target valley.

As a preferred embodiment, obtaining the resonance cycle of the resonance waveform includes:
obtaining any one of a time length corresponding to multiple continuous valleys, a time length corresponding to multiple continuous peaks, or a time length corresponding to multiple continuous zero crossing points in the resonance waveform; and
calculating the resonance cycle according to the obtained time length and a corresponding number of the multiple continuous valleys, the multiple continuous peaks, or the multiple continuous zero crossing points.

The present embodiment is intended to provide a specific way of obtaining the resonance cycle. Specifically, according to the time length corresponding to multiple continuous peaks in a resonance waveform, multiple continuous valleys, or multiple continuous zero crossing points, and the corresponding number of the multiple continuous peaks, the multiple continuous valleys, or the multiple continuous zero crossing points, the resonance cycle can be calculated.

For example, if the time length corresponding to N continuous zero crossing points is t1, the resonance period will be T=2t1/N (there are two zero crossing points in each period, one corresponding to a range from positive half-cycle to negative half-cycle and the other corresponding to a range from negative half-cycle to positive half-cycle). For example, if the time length corresponding to n continuous valleys is t2, the resonance period will be T=t2/n. The calculation way for peaks is identical with that for valleys, which is not described in the present disclosure.

In order to ensure the accuracy and reliability of the control of the switching power supply, the resonance cycle of the switching power supply is detected at a preset interval in the present disclosure to update the resonance cycle of the switching power supply at any time, so as to adjust the second parameter according to the latest resonance period detected at the moment.

As a preferred embodiment, adjusting the second parameter includes:
obtaining a working parameter of the switching power supply at a preset interval; and
determining the second parameter according to the working parameter and a preset mapping relationship between a working parameter and a second parameter.

The present embodiment is intended to provide another implementation to adjust the second parameter. Specifically, the present disclosure presets the preset mapping relationship between the working parameter and the second parameter. After determining the working parameter of the switching power supply, it is possible to look up in the preset mapping relationship between the working parameter and the delay time according to the working parameter of the switching power supply, so as to determine the second parameter corresponding to the working parameter. Then the delay time is adjusted according to the second parameter, so that the control signal controls the primary-side power switch tube to reliably turn on at the target valley when the function value of the periodic function corresponding to the first parameter is zero.

As a preferred embodiment, after obtaining the working parameter of the switching power supply at a preset interval, the method further includes:
determining whether the working parameter changes; and
if determining that the working parameter changes, re-determining the second parameter according to the changed working parameter and the preset mapping relationship between the working parameter and the second parameter.

Specifically, in the present embodiment, the reason for causing a change of the second parameter is usually a change in the working parameter of the switching power supply. Therefore, detecting is performed on the working parameter of the switching power supply in the present disclosure, and the step of determining the second parameter will be re-performed when detecting that the working parameter changes. When the time interval of two adjacent detection of the working parameter is small enough, it can be considered to be real-time monitoring of the working parameter of the switching power supply.

As a preferred embodiment, determining whether the working parameter has changed includes:
determining whether a grade of the working parameter changes; and
if determining that the grade changes, determining that the working parameter changes.

Specifically, even when the change of the working parameter is minimal, the step of determining the second parameter is re-performed, and thus the second parameter needs to be determined frequently, which will cause the processor consume higher power.

Therefore, in order to prevent this, the working parameter is set to have different grades in the present disclosure. In this case, in a specific implementation, determine whether the working parameter changes includes: determining whether the grade of the working parameter changes, and determining that the working parameter changes if determining that the grade changes, and then triggering the re-determining of the second parameter, thus avoiding frequently re-determining the second parameter and reducing the power consumption of the processor to a certain extent.

As a preferred embodiment, the working parameter includes one or more of a primary-side input voltage, a secondary-side output voltage, and a load value of the switching power supply.

The present embodiment is intended to specifically limit the working parameter. In a further embodiment, the working parameter can be but not limited to the primary-side input voltage, the secondary-side output voltage, and the load value of the switching power supply.

Here, a range of the primary-side input voltage can be but not limited to 90VAc~265Vac, and a range of the output voltage can be but not limited to 3.3V~21V. In setting the grades of the working parameter, a value range of the primary-side input voltage, the secondary-side output voltage, and the load value can be divided into several levels (grades) according to actual demands. A specific division manner is not specified in the present disclosure.

As a preferred embodiment, when the working parameter includes the primary-side input voltage and the secondary-side output voltage of the switching power supply;
obtaining the working parameter of the switching power supply includes:
when the primary-side power switch tube is on, calculating the primary-side input voltage according to a voltage of auxiliary winding, the number of turns of the auxiliary winding, and the number of turns of primary-side winding; and
when the secondary-side switch tube is on, calculating the secondary-side output voltage according to the voltage of the auxiliary winding, the number of turns of the auxiliary winding, and the number of turns of secondary-side winding;
where the auxiliary winding is grounded together with the primary-side winding.

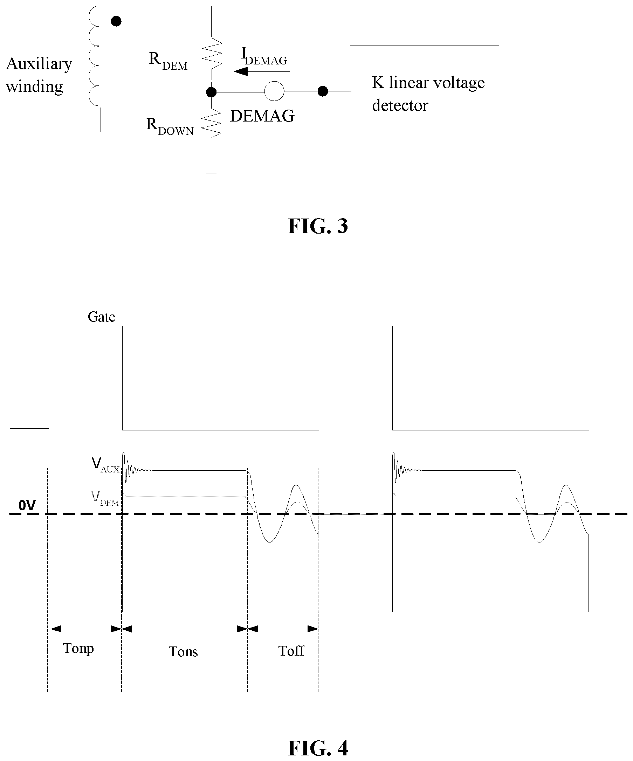

The present embodiment is intended to limit the specific implementation of calculating the primary-side input voltage and the secondary-side output voltage. Specifically, the specific implementation of calculating the primary-side input voltage may include: calculating the primary-side input voltage according to the voltage of the auxiliary winding, the number of turns of the auxiliary winding, and the number of turns of the primary-side winding when the primary-side power switch tube is on. Specifically, referring to FIG. 3, FIG. 3 is a partial structural diagram of a switching power supply according to the present disclosure. The primary-side input voltage is derived by measuring a current flowing through a pull-up resistance R_{DEM} of the auxiliary winding, which is specifically performed by: Vin = (*I_{DEMAG} * R_{DEM}*) *** (*Nₚ*/*Nₐ*), where Vin is the primary-side input voltage, I_{DEMAG} is the current flowing through the pull-up resistance, R_{DEM} is the pull-up resistance connected to the auxiliary winding, Nₚ is the number of turns of the primary-side winding, and Nₐ is the number of turns of the auxiliary winding.

The specific implementation of calculating the secondary-side output voltage may include: calculating the secondary-side output voltage according to the voltage of the auxiliary winding, the number of turns of the auxiliary winding, and the number of turns of the secondary-side winding when the secondary-side switch tube is on. Specifically, referring to FIG. 4, FIG. 4 is a schematic diagram of a waveform according to the present disclosure, where the secondary-side output voltage is obtained by measuring a voltage VDEM during Tons plus Toff. Tons is a period during which the secondary-side switch tube is on, Toff is a period during which the secondary-side switch tube is off but the primary-side power switch tube is not on in the next cycle (that is, a period during which resonance occurs), and Gate\Tonp in FIG. 4 is a period during which the primary-side power switch tube is on. In this case, Vo = V_{AUX} * (*N_{S}*/N*ₐ*), where Vo is the secondary-side output voltage, VAUX is a voltage on the auxiliary winding when the secondary-side switch tube is on, Na is the number of turns of the auxiliary winding, and Ns is the number of turns of the secondary-side winding.

As a preferred embodiment, when the working parameter includes a load value;
obtaining the working parameter of the switching power supply includes:
   obtaining a switching frequency of the primary-side power switch tube of the switching power supply; and
   determining the load value according to the switching frequency;
where the load value is positively correlated with the switching frequency.

The present embodiment is intended to limit the specific implementation of determining the load value. Specifically, the current load value of the switching power supply is determined according to the switching frequency of the primary-side power switch tube of the switching power supply, where the switching frequency of the primary-side power switch tube is positively correlated with the load value. Specifically, a switch cycle of the primary-side power switch tube is a sum of an on-time of the primary-side power switch tube, an on-time of the secondary-side switch tube, and the resonance time (specifically, a period from the beginning of resonance and a moment when the primary-side power switch tube is turned on at the target valley). At present, when the switching power supply has a light load, a back valley in the resonance waveform is selected. At this time, a corresponding switch cycle is longer and the switching frequency is lower. When the switching power supply has a heavy load, a front valley in the resonance waveform is selected. At this time, the corresponding switch cycle is shorter and the switching frequency is higher. Therefore, if it is necessary to determine the load value of the switching power supply, it is only required to perform the determination according to the current switching frequency of the primary-side power switch tube.

Of course, the above is only an implementation provided by the present embodiment. The load value may also be detected by a detection device, which is not limited in the present disclosure.

As a preferred embodiment, extending the resonance period signal by a delay time, so that a control signal controls a primary-side power switch tube of the switching power supply to turn on within a preset range near a target valley of a resonance waveform according to the resonance period signal and a delay signal, includes:
after determining the target valley according to the load value of the switching power supply, detecting a previous zero crossing point of a previous valley before the target valley; and
determining a moment obtained by extending the control signal corresponding to the previous zero crossing point by the delay time as the moment when the primary-side power switch tube is turned on, so that the control signal controls the primary-side power switch tube to turn on at the determined moment.

Specifically, determining the moment when the primary-side power switch tube is turned on in the present disclosure can include several steps. First, the zero crossing points of the resonance waveform are detected to determine the position of the target valley. The specific way to determine the moment when the primary-side power switch tube is turned on includes: determining the previous valley before the target valley; then detecting a moment corresponding to the previous zero crossing point before the determined previous valley; adding the delay time to the moment corresponding to the previous zero crossing point to obtain the moment when the primary-side power switch tube is turned on, which is any moment near the target valley. According to the method in the present disclosure, the target valley can be accurately determined, and an on-frequency of the primary-side power switch tube of the switching power supply can be continuously adjusted to avoid the frequency of the primary-side power switch tube remaining unchanged, such that the EMI performance of the switching power supply can be improved.

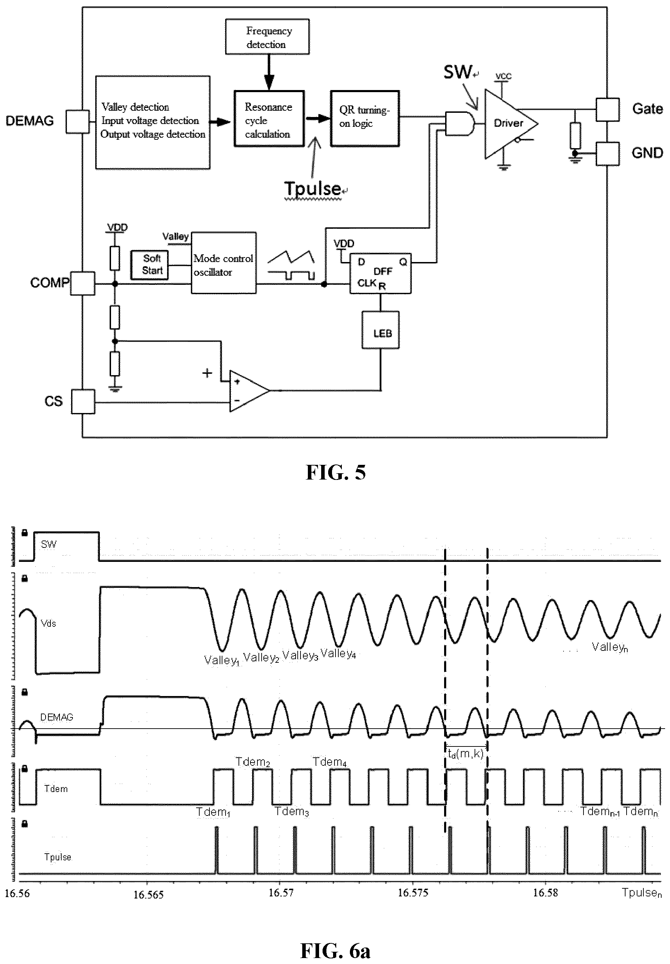

The design objective of the present disclosure is to control the primary-side power switch tube to turn on at the negative half-cycle of the target valley, and two embodiments are provided in the present disclosure. The first embodiment can be referred to FIG. 5 and FIG. 6a-FIG. 6g, where FIG. 5 is a control schematic diagram of a switching power supply according to the present disclosure; FIG. 6a is a working waveform diagram of a switching power supply according to the present disclosure; FIG. 6b is a schematic diagram of generating a resonance cycle signal according to the present disclosure; FIG. 6c is a schematic diagram of a control signal according to the present disclosure; and FIG. 6d is a waveform diagram of a periodic function related to a first parameter according to the present disclosure. The first embodiment is described as follows.

Tdem in FIG. 6a is a result obtained by comparison between DEMAG and 0V in FIG. 6b, that is, Tdem is a signal representing the zero crossing points of the resonance waveform. In the embodiment, Tdem is used as the resonance cycle signal described above. Vds in FIG. 6a is the resonance waveform of the primary-side power switch tube.

In FIG. 6c, the input CLK of the x-bits jitter counter can be either an oscillator output or a SW signal. The x-bits jitter counter counts the CLK and outputs the count result m, where m ranges from 1 to 2^{x}. The x-bits jitter counter can be a cycle counter. When m=2^{x}, m=1 after the next CLK (m is the first parameter described above). The implementation of D to I in FIG. 6c is shown in FIG. 6d. The m is converted into the output current Ij(m), where Ij(m) ranges from 2^{x-2} * Istep to -(2^{x-2}-1) * Istep (where Ij(m) is the above periodic function related to the first parameter).

The Valley Lockout module selects the n-th Valley to perform the turning on according to the load (COMP voltage in FIG. 5) of the switching power supply; (i.e. valley lockout is determined by the load).

The Current Table module detects the primary-side input voltage and the secondary-side output voltage through DEMAG; and, according to the primary-side input voltage, the secondary-side output voltage, and the target Valley (n), selects the preset output current It(k), so that Tpulse (the control signal) corresponds to the valley when m=1 or m=2*2^{x-2}. If the primary-side input voltage, the secondary-side output voltage, and the load value of the system are not changed, k (the second parameter) is not changed.

After the (n-1)-th rising edge Tdemₙ₋₁, the nth Tpulseₙ (Tpulseₙ=Tdemₙ₋₁+t_{d}(m, k)) is generated after a delay of t_{d}(m, k), where the specific implementation of t_{d}(m, k) is: t_{d}(m,k)=C*Vref/[Ij(m)+It(k)].

At the n-th Tpulseₙ rising edge, the primary-side power switch tube is turned on.

If, for m=1 or m=2*2^{x-2}, the primary-side power switch tube is turned on at the reference position (specifically may be the target valley) of the negative half-cycle of the target valley corresponding to Tpulseₙ, and Ij(m) changes periodically, the primary-side power switch tube is controlled to turn on and oscillate in the negative half-cycle range.

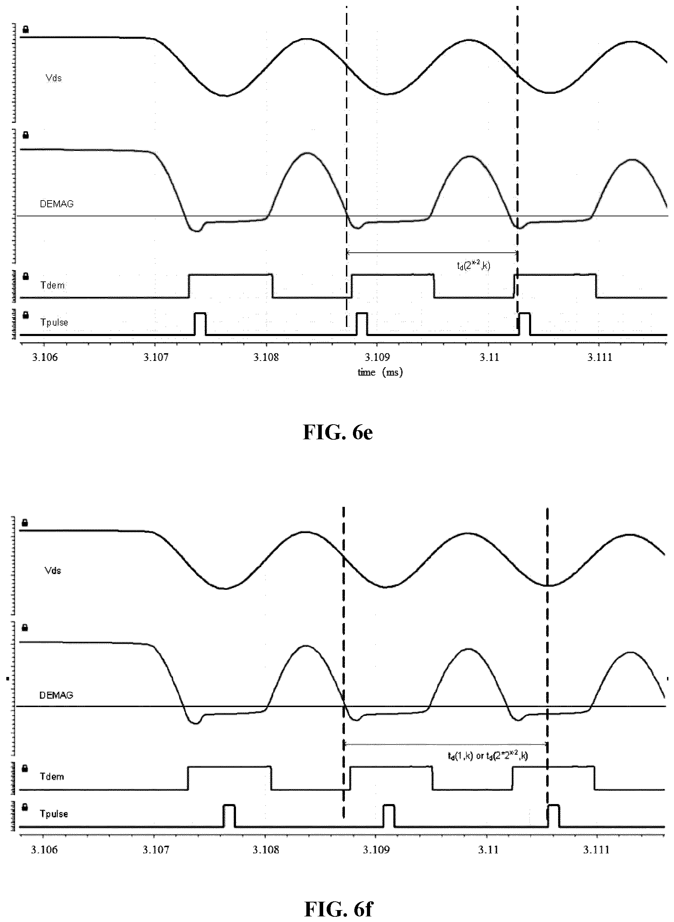

FIG. 6e is a first waveform diagram of a primary-side power switch tube that is turned on at the left of the target valley according to the present disclosure, where m=2^{x-2}, Ij(m) is positive, and Tpulse is at a reference position, i.e. the left of the target valley here.

FIG. 6f is a first waveform diagram of a primary-side power switch tube that is turned on at the target valley according to the present disclosure, where m=1 or 2*2^{x-2}, Ij(m) is zero, and Tpulse is at a reference position, i.e. the target valley here.

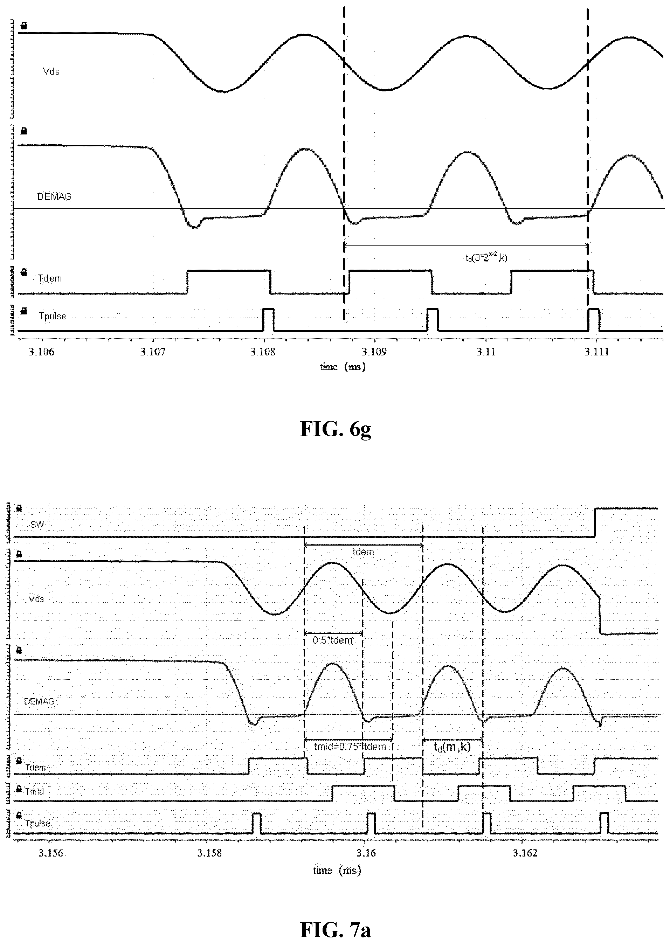

FIG. 6g is a first waveform diagram of a primary-side power switch tube that is turned on at the right of the target valley according to the present disclosure, where m=3*2^{x-2}, Ij(m) is negative, and Tpulse is at a reference position, i.e. the right of the target valley here.

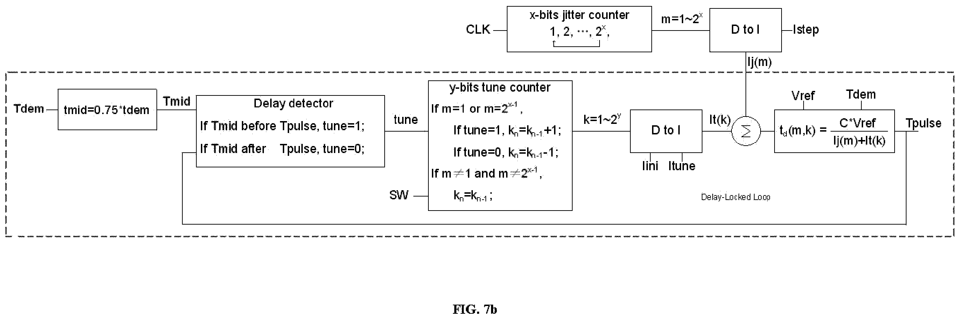

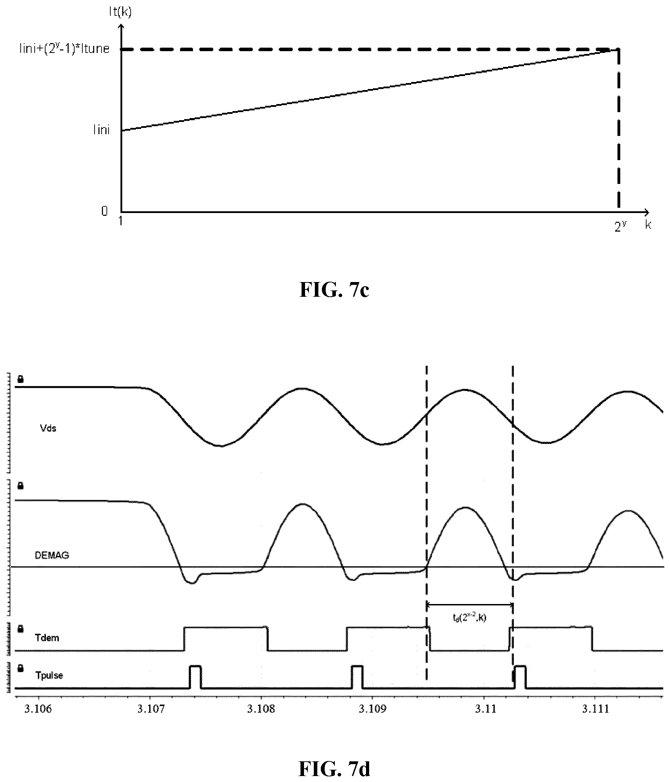

The second embodiment can be referred to FIG. 7a-FIG. 7f, where FIG. 7a is another working waveform diagram of a switching power supply according to the present disclosure; FIG. 7b is a schematic diagram of another control signal according to the present disclosure; and FIG. 7c is a schematic diagram of a function related to a second parameter according to the present disclosure. The second embodiment is described as follows.

The present embodiment uses the principle of DLL (Delay-Locked Loop) to obtain a sequential relationship between Tpulseₙ (rising edge) and a reference signal by comparing, and dynamically adjusts t_{d} (m, k) so that Tpulseₙ corresponds to the valley when m is a fixed value (the function value of the function corresponding to m is zero).

Tdem is sampled and Tmid (a falling edge of Tdem +0.75*tdem) is generated according to Ttdem. As shown in FIG. 7a, the falling edge of Tmid corresponds to the valley of the resonance waveform.

When m=1 or m=2*2^{x-2}, the positions of the rising edge of Tpulse and the falling edge of Tmid are compared, and k is adjusted SW cycle by SW cycle, where k ranges from 1 to 2^{y} (y is the value of the counter).

If the falling edge of Tmid is ahead of the rising edge of Tpulse, kₙ=kₙ₋₁+1; and
if the falling edge of Tmid lags behind the rising edge of Tpulse, kₙ=kₙ₋₁-1;
where, when m≠1 and m≠2*2^{x-2}, kₙ= kₙ₋₁.

The D to I module in FIG. 7b, as shown in FIG. 7c, converts k into the output current It(k). It(k) ranges from Iini to Iini+(2^{y}-1)*Itune.

Finally, after dynamically adjusting td(m, k) in several cycles, when m=1 or m=2*2^{x-2} (that is, when the function value Ij(m) of the periodic function related to the first parameter m is zero), the rising edge of Tpulse will be at the valley, and it will dynamically follow the change of the resonance period when the working condition changes.

If, for m=1 or m=2*2^{x-2} (the function value of the periodic function corresponding to the first parameter is zero), the primary-side power switch tube is turned on at the reference position (specifically may be the target valley) at the negative half-cycle of the target valley corresponding to Tpulseₙ, and Ij(m) changes periodically, the primary-side power switch tube is controlled to turn on in the negative half-cycle range of the target valley.

FIG. 7d is a second waveform diagram of a primary-side power switch tube that is turned on at the left of the target valley according to the present disclosure, where m=2^{x-2}, Ij(m) is positive, and Tpulse is at the reference position, i.e. at the left of the target valley here.

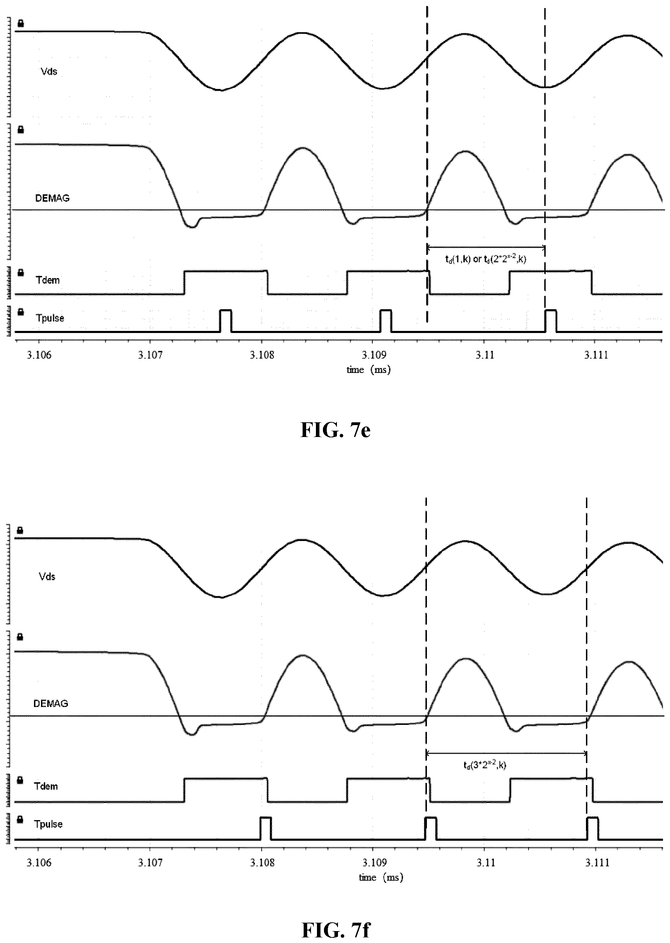

FIG. 7e is a second waveform diagram of a primary-side power switch tube that is turned on at the target valley according to the present disclosure, where m=1 or 2*2^{x-2}, Ij(m) is zero, and Tpulse is at the reference position, i.e. at the target valley here.

FIG. 7f is a second waveform diagram of a primary-side power switch tube that is turned on at the right of the target valley according to the present disclosure, where m=3*2^{x-2}, Ij(m) is negative, and Tpulse is at the reference position, i.e. at the right of the target valley here.

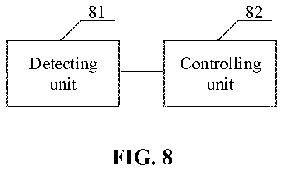

In order to solve the above technical problems, the present disclosure also provides a control circuit for a switching power supply. As shown in FIG. 8, FIG. 8 is a structural block diagram of a control circuit for a switching power supply according to the present disclosure. The circuit includes:
a detecting unit 81, configured to detect a resonance cycle signal of the switching power supply in real time; and
a controlling unit 82, configured to extend the resonance cycle signal by a delay time, so that a control signal controls a primary-side power switch tube of the switching power supply to turn on within a preset range near a target valley of a resonance waveform according to the resonance cycle signal and the extended resonance cycle signal;
where the delay time is related to a first parameter and a second parameter, the first parameter being a value set over time within a certain range, and the second parameter being a function related to a resonance cycle of the switching power supply.

As a preferred embodiment, the controlling unit includes:
a resonance valley corresponding circuit, configured to, when a function value of the periodic function associated with the first parameter is zero, adjust the second parameter, such that the control signal corresponds to a reference position in the resonance waveform according to the resonance cycle signal and the extended resonance cycle signal, wherein the reference position being a position in a center, on the left, or on the right of the target valley; and
a jitter frequency circuit, configured to add the function value of the periodic function of the first parameter to the reference position so that the control signal controls the primary-side power switch tube of the switching power supply to turn on within the preset range near the target valley.

The description of the control circuit of the switching power supply can be referred to the above embodiments, which will not be repeated here.

In order to solve the above technical problems, the present disclosure also provides a switching power supply, including the control circuit for the switching power supply described above. The description of the switching power supply can be referred to the above embodiments, which will not be repeated here.

It should be further noted that relation terms such as "first" and "second" herein are only used to distinguish one entity or operation from another entity or operation, and does not necessarily require or imply that there is an actual relation or sequence between these entities or operations. Furthermore, the term "comprise", "include" or any other variation thereof is intended to cover a non-exclusive inclusion, so that a process, a method, an article, or a device including a set of elements includes not only those elements, but also other elements not expressly listed or elements inherent in such a process, method, article, or device. Unless expressively limited otherwise, a process, method, article or device limited by "comprising/including a(n)..." does not exclude existence of another identical element in such process, method, article or device.

According to the embodiments disclosed described above, those skilled in the art can implement or use the present disclosure. Various modifications to the embodiments are obvious to those skilled in the art, and general principles defined in the present disclosure may be implemented in other embodiments without departing from the spirit or scope of the present disclosure. Therefore, the present disclosure is not limited to the embodiments illustrated herein, but should be conformed to the widest scope consistent with the principles and novel features disclosed herein.

## Claims

1. A control method for a switching power supply, comprising:
detecting a resonance cycle signal of the switching power supply in real time; and
extending the resonance cycle signal by a delay time, so that a control signal controls a primary-side power switch tube of the switching power supply to turn on within a preset range near a target valley of a resonance waveform according to the resonance cycle signal and the extended resonance cycle signal;
wherein the delay time is related to a first parameter and a second parameter, the first parameter being a value set over time within a certain range, and the second parameter being a function related to a resonance cycle of the switching power supply.

2. The control method for a switching power supply according to claim 1, wherein the preset range is related to a periodic function associated with the first parameter; and
extending the resonance cycle signal by a delay time, so that a control signal controls a primary-side power switch tube of the switching power supply to turn on within a preset range near a target valley of a resonance waveform according to the resonance cycle signal and the extended resonance cycle signal, comprises:
when a function value of the periodic function associated with the first parameter is zero, adjusting the second parameter, such that the control signal corresponds to a reference position in the resonance waveform according to the resonance cycle signal and the extended resonance cycle signal, wherein the reference position being a position in a center, on the left, or on the right of the target valley; and
adding the function value of the periodic function of the first parameter to the reference position so that the control signal controls the primary-side power switch tube of the switching power supply to turn on within the preset range near the target valley.

3. The control method for a switching power supply according to claim 2, wherein adjusting the second parameter comprises:
obtaining the resonance cycle of the resonance waveform; and
adjusting the second parameter adaptively according to the resonance cycle, so that the control signal controls the primary-side power switch tube to turn on at the target valley.

4. The control method for a switching power supply according to claim 3, wherein obtaining the resonance cycle of the resonance waveform comprises:
obtaining any one of a time length of a plurality of continuous valleys, a time length of a plurality of continuous peaks, or a time length of a plurality of continuous zero crossing points in the resonance waveform; and
calculating the resonance cycle according to the obtained time length and a corresponding number of the plurality of continuous valleys, the plurality of continuous peaks, or the plurality of continuous zero crossing points.

5. The control method for a switching power supply according to claim 2, wherein adjusting the second parameter comprises:
obtaining a working parameter of the switching power supply at a preset interval; and
determining the second parameter according to the working parameter and a preset mapping relationship between a working parameter and the second parameter.

6. The control method for a switching power supply according to claim 5, wherein after obtaining the working parameter of the switching power supply at the preset interval, the method further comprises:
determining whether the working parameter changes; and
if determining that the working parameter changes, re-determining the second parameter according to the changed working parameter and the preset mapping relationship between the working parameter and the second parameter.

7. The control method for a switching power supply according to claim 6, wherein determining whether the working parameter changes, comprises:
determining whether a grade of the working parameter changes; and
if determining that the grade changes, determining that the working parameter changes.

8. The control method for a switching power supply according to claim 5, wherein the working parameter comprises one or more of a primary-side input voltage, a secondary-side output voltage, and a load value of the switching power supply.

9. The control method for a switching power supply according to claim 8, wherein when the working parameter comprises the primary-side input voltage and the secondary-side output voltage of the switching power supply;
obtaining the working parameter of the switching power supply comprises:
when the primary-side power switch tube is on, calculating the primary-side input voltage according to a voltage of auxiliary winding, a number of turns of the auxiliary winding, and a number of turns of primary-side winding; and
when the secondary-side switch tube is on, calculating the secondary-side output voltage according to the voltage of the auxiliary winding, the number of turns of the auxiliary winding, and a number of turns of secondary-side winding;
wherein the auxiliary winding is grounded together with the primary-side winding.

10. The control method for a switching power supply according to claim 8, wherein when the working parameter comprises a load value;
obtaining the working parameter of the switching power supply comprises:
obtaining a switching frequency of the primary-side power switch tube of the switching power supply; and
determining the load value according to the switching frequency;
wherein the load value is positively correlated with the switching frequency.

11. The control method for a switching power supply according to any one of claims 1 to 10, wherein extending the resonance cycle signal by a delay time, so that a control signal controls a primary-side power switch tube of the switching power supply to turn on within a preset range near a target valley of a resonance waveform according to the resonance cycle signal and the extended resonance cycle signal, comprises:
after determining the target valley according to the load value of the switching power supply, detecting a previous zero crossing point of a previous valley before the target valley; and
determining a moment obtained by extending the control signal corresponding to the previous zero crossing point by the delay time as the moment when the primary-side power switch tube is turned on, so that the control signal controls the primary-side power switch tube to turn on at the determined moment.

12. A control circuit for a switching power supply, comprising:
a detecting unit, configured to detect a resonance cycle signal of the switching power supply in real time; and
a controlling unit, configured to extend the resonance cycle signal by a delay time, so that a control signal controls a primary-side power switch tube of the switching power supply to turn on within a preset range near a target valley of a resonance waveform according to the resonance cycle signal and the extended resonance cycle signal;
wherein the delay time is related to a first parameter and a second parameter, the first parameter being a value set over time within a certain range, and the second parameter being a function related to a resonance cycle of the switching power supply.

13. The control circuit for the switching power supply according to claim 12, wherein the controlling unit comprises:
a resonance valley corresponding circuit, configured to, when a function value of the periodic function associated with the first parameter is zero, adjust the second parameter, such that the control signal corresponds to a reference position in the resonance waveform according to the resonance cycle signal and the extended resonance cycle signal, wherein the reference position being a position in a center, on the left, or on the right of the target valley; and
a jitter frequency circuit, configured to add the function value of the periodic function of the first parameter to the reference position so that the control signal controls the primary-side power switch tube of the switching power supply to turn on within the preset range near the target valley.

14. A switching power supply, comprising the control circuit for the switching power supply according to claim 12 or claim 13.
